# EUROPEAN PATENT SPECIFICATION

(11) **EP 1 806 941 B1**
(45) Date of publication and mention of the grant of the patent: **10.02.2010**
(21) Application number: 06126669.8
(22) Date of filing: 20.12.2006
(51) Int. Cl.: H04W 36/14

(54) **A method of dual transfer mode handover**
Verfahren zur Übergabe eines dualen Übertragungsmodus
Procédé de changement de cellule en mode de transfert double

(30) Priority: 10.01.2006 GB 0600340
(43) Date of publication of application: 11.07.2007
(73) Proprietor: Nokia Siemens Networks GmbH & Co. KG, 81541 München (DE)
(72) Inventor: Davis, Simon, Romsey, Hampshire SO51 7LX (GB); Hole, David, Romsey, Hampshire SO51 7DB (GB)

(56) References cited:
- NOKIA: "DTM Handover - Failure cases" 3GPP TSG GERAN 2 #26BIS, G2-050400, [Online] 3 October 2005 (2005-10-03), - 5 October 2005 (2005-10-05) pages 1-8, XP002430906 Retrieved from the Internet: URL:http://www.3gpp.org/ftp/tsg_geran/Wg2_ Protocol_Aspects/GERAN2_26bis_Sophia-Antip olis/Docs/> [retrieved on 2007-04-25]
- SIEMENS: "DTM Handover - Proceeding with CS Handover" 3GPP TSG GERAN2 #28BIS, G2-060020, [Online] 21 March 2006 (2006-03-21), - 24 March 2006 (2006-03-24) pages 1-6, XP002430907 Retrieved from the Internet: URL:http://www.3gpp.org/ftp/tsg_geran/Wg2_ Protocol_Aspects/GERAN2_28bis_Paris/Docs/> [retrieved on 2007-04-25]
- SIEMENS: "DTM Handover Failure Case and Delay Analysis - the Source BSS's Viewpoint" 3GPP TSG GERAN #28, GP-060193, [Online] 16 January 2006 (2006-01-16), - 20 January 2006 (2006-01-20) pages 1-10, XP002430908 Retrieved from the Internet: URL:http://www.3gpp.org/ftp/tsg_geran/TSG_ GERAN/GERAN_28_Brussels/Docs/> [retrieved on 2007-04-25]
- 3GPP: "Technical Specification Group GSM/EDGE Radio Access Network; Dual Transfer MOde (DTM); Stage 2 (Release 6)" 3GPP TS 43.055 V6.12.0, [Online] November 2005 (2005-11), pages 1-36, XP002430909 Retrieved from the Internet: URL:http://www.3gpp.org/ftp/Specs/archive/ 43%5Fseries/43.055/> [retrieved on 2007-04-25]

## Description

This invention relates to a method of dual transfer mode (DTM) handover, in particular for global system for mobile communications (GSM) networks and the 3^{rd} generation partnership project (3GPP) global system for mobile communication (GSM)/enhanced data rates for GSM evolution (EDGE) radio access network (GERAN) with General Packet Radio Service (GPRS).

In GSM networks, a DTM handover command is being defined for the situation where a mobile station, or mobile device, has both circuit-switched and packet switched resources. This command is intended to inform the mobile station of resources available to it in a new cell in the two domains: circuit-switched and packet-switched. This is quite a long message that may take a considerable time to transmit to the mobile station. Following receipt of this message, the mobile is able to move to the new cell.

The DTM handover command is constructed by the target base station subsystem (BSS), and passed to the source BSS, which then sends it to the mobile station. In the normal case, two (identical) copies of the DTM Handover Command are sent from the target BSS to the source BSS, one via the circuit switched (CS) core network and one via the packet switched (PS) core network. The source BSS cannot be sure that the DTM Handover Command is valid unless it receives both copies of the message. Therefore, in the current procedure, the DTM handover command is not sent to the mobile station until both copies have been received by the source BSS.

The problem is that waiting for the second copy of the message before beginning transmission is an unnecessary delay and the message itself is quite large in respect of sending over the air interface to the mobile, which may result in a loss of the connection before the handover can be carried out. The underlying reason for the delay is the principle that the mobile station shall act on the message as soon as it has been received; therefore the message cannot be sent before the network knows the mobile can proceed with the action.

There is a further problem in the case where only one copy of the DTM handover command is received by the source BSS. The current proposal is for the procedure to be cancelled if only one copy is received in an acceptable time frame.

These problems have not been addressed up to now, as DTM Handover has only recently been standardized. There exists currently a handover procedure for mobiles in DTM, this is different because it does not handover both CS and PS resources, it only deals with handover of CS resources.

Nokia: "DTM Handover - Failure cases"; 3GPP TSG GERAN2 #26bis, G2-050400; 03.10. - 05.10.2005; pages 1 to 8; discloses a number of different DTM handover failure scenarios. A DTM handover command is only forwarded to a mobile device when acknowledgements, be they positive or negative, are returned from both the CS and PS domains.

In accordance with the present invention, a method of dual transfer mode (DTM) handover in a communication system comprising at least one mobile device, a source node and a target node; the method comprising: sending a handover request from a source node to a target node, in a first domain and a second domain; returning an acknowledgement in both the first and second domains, the acknowledgements including a DTM handover command; and when a first positive acknowledgement is received from the first domain, forwarding to a mobile device, all or part of the DTM handover command, **characterised in that** all or part of the DTM handover command is forwarded to the mobile device prior to receiving the acknowledgement from the second domain.

The present invention allows the source node to send on to the mobile, the DTM handover command as soon as it receives the first acknowledgement, rather than having to wait for acknowledgements from both domains to be received at the source node. This reduces delay and increases the chance of the mobile successfully receiving the message without losing its connection.

Preferably, the DTM handover command is forwarded to the mobile device encapsulated in a radio resource (RR) or radio link control (RLC) message.

Encapsulating the DTM handover command allows additional data to be added by the source node if required.

Preferably, the RR or RLC message includes an indication to the mobile device of the validity of the DTM handover command in one or both domains.

The validity indicator can be used by the mobile device in various ways to further streamline the process.

Preferably, the mobile device proceeds with handover after receipt of the DTM handover command, without the mobile having received confirmation that information concerning both domains is valid.

Preferably, the source node takes into account the quality of the radio link between itself and the mobile device when deciding whether or not to send the message to the mobile device without having received confirmation that information concerning both domains is valid.

As well as receiving the DTM handover command without waiting until the source node has received acknowledgements in both domains, the mobile device is also able to proceed to handover without validity of the DTM Handover command in both domains being confirmed, further reducing delay and likelihood of loss of connection. This is consistent with the assumption that the mobile should act on any message it receives, without further delay.

Preferably, an indication of validity in one or both domains is provided by the target node in response to a request from the mobile device after connection to the target node.

If the target BSS confirms that resources are there, then it saves mobile from sending more sets of messages to obtain these resources once in the new cell. Thus, even if the handover has proceeded without both domains being confirmed, perhaps due to a time-out or loss of the acknowledgement, the mobile device is still able to check that resources have been allocated by the target node and proceed in both domains if they have. This deals with the situation when one message is lost or timed out on the return trip, but the target BSS had actually received both requests on the outward leg and so allocated the resources necessary for the DTM handover to proceed in both domains.

Alternatively, a wait indication is added to the RR message.

This assumes that the mobile will always proceed once instructed, so a wait indicator is added to the DTM handover message to force the mobile to wait for a subsequent signal before continuing with the handover.

Preferably, a proceed signal is sent from the source node to the mobile device.

If the set up is changed to prevent the mobile from continuing with handover until a proceed signal has been received, then the wait indicator is not required. The proceed signal ensures that after the mobile receives the DTM handover command, it only proceeds with the handover when specifically instructed to.

Preferably, the proceed signal is sent from the source node to the mobile on receipt of a second positive acknowledgement.

Preferably, the proceed signal includes the indication to the mobile device of the validity of the DTM handover command in one or both domains.

Preferably, all but the final segment of the message is sent after the first positive acknowledgement is received at the source node; and the proceed signal comprises the final segment of the message.

Alternatively, the mobile device only completes the handover on receipt of the proceed signal from the source node.

In another embodiment, the DTM handover command contains resources for only one domain.

If there has been a failure of one request message, it is beneficial to allow the handover to continue, although the handover only continues for those resources in the domain via which the message was received. By using exactly the same message structure as before, rather than sending e.g. a CS only handover type message, the source BSS can simply forward the DTM handover command, without concerning itself about the actual content.

Preferably, the first domain comprises one of circuit switched (CS) and packet switched (PS) domains; and the second domain comprises the other of CS and PS domains.

An example of a method of dual transfer mode handover in a communication system according to the present invention will now be described in which:
Figure 1 illustrates a conventional handover procedure where the DTM Handover Command is only forwarded after acknowledgements are received in both domains.
Figure 2 illustrates an example of a method of DTM Handover according to the present Invention.
Figure 3 illustrates a conventional response to a failure of one acknowledgement.
Figure 4 illustrates the approach of the present invention to deal with failure of one acknowledgement.
Figure 5 illustrates message flow for conventional handover in more detail.
Figure 6 illustrates an example of a conventional approach in more detail in case of a failure.
Figure 7 illustrates another example of failure of an acknowledgment message and its conventional treatment.
Fig. 8 illustrates one example of the method of the present invention in more detail.
Fig. 9 shows how an acknowledgement can be used to form a radio resource message for use in the method of the present invention.
Fig. 10 illustrates how the radio resource message can incorporate a proceed indicator in the method of the present invention.

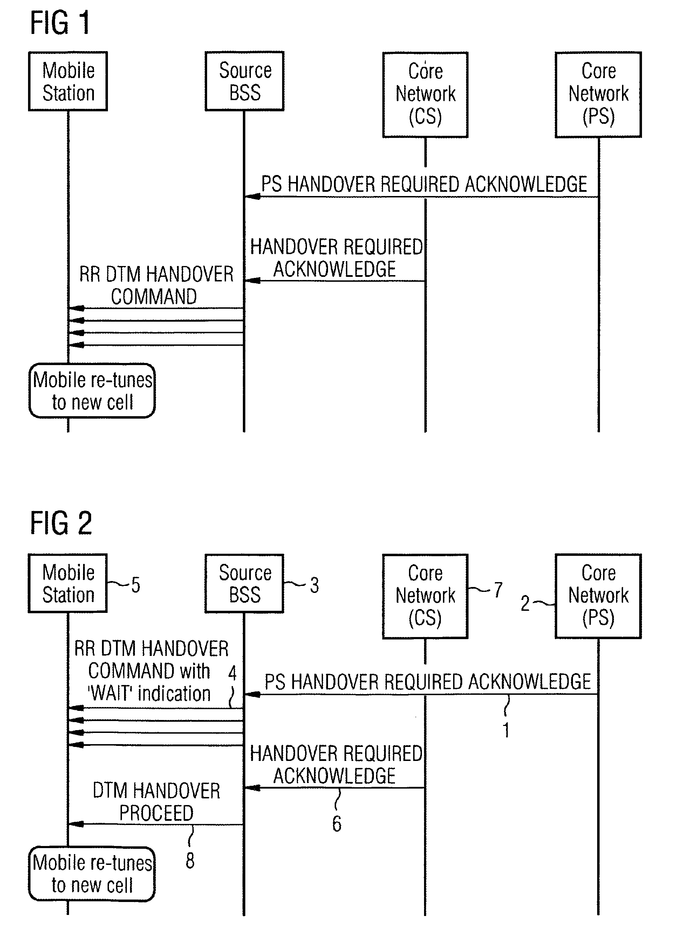

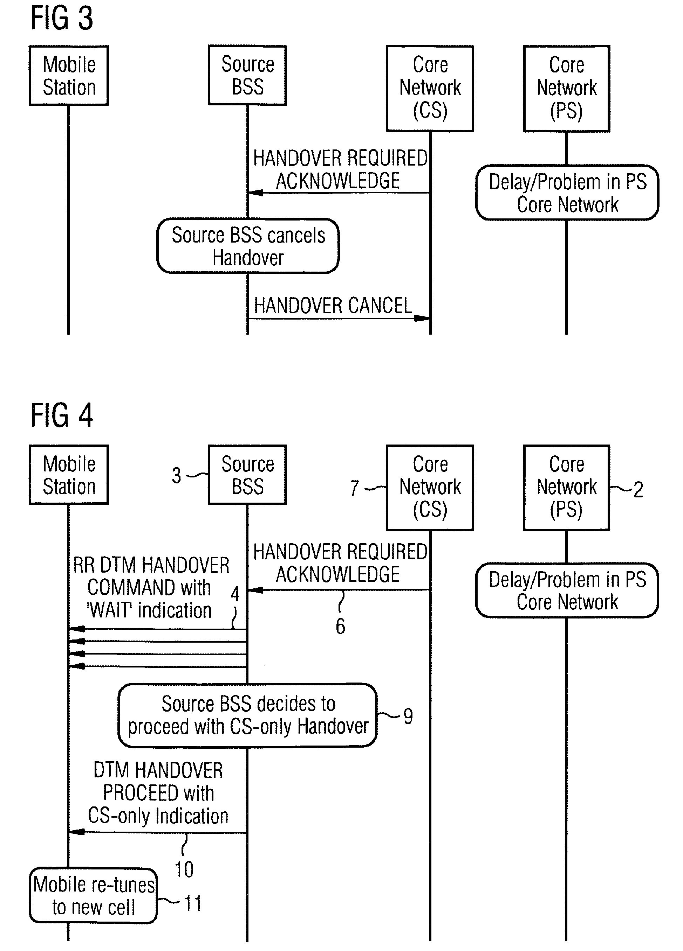

It has been proposed that a DTM Handover Command can only be sent if Handover Required Acknowledge messages have been received in both domains - CS and PS for the example illustrated in Fig. 1. Furthermore, as shown in Fig. 3, if a problem gives rise to only one acknowledgement in the two domains being generated, then the source BSS cancels the handover altogether. The present invention addresses these problems, as shown simply in Figs. 2 and 4, the first, by only requiring one acknowledgement to be received from either domain before forwarding the DTM Handover command to the mobile device and the second, by proceeding in the domain which has produced an acknowledgement, even if there are not acknowledgements from both domains.

Looking at the example of the present invention in Fig. 2 more closely, it can be seen that a PS Handover Request Acknowledge message 1 is sent from the PS core network 2 to the source BSS 3. On receipt at the source BSS 3, a radio resource message 4, here called an RR DTM handover command is generated, including a wait indication and forwarded to the mobile device 5. In due course, the source BSS 3 receives from the CS core network 7, a CS Handover Required Acknowledge message 6 and as a result sends a proceed signal 8, here called DTM Handover Proceed, to the mobile station 5, whereafter the mobile tunes to a new cell.

For the second example of the present invention, as shown in Fig. 4, where there is an error in the PS core network 2, only the CS core network 7 produces an acknowledgement, the CS Handover Request Acknowledge 6, and the source BSS 3 forwards the radio resource message 4 containing the DTM Handover Command as before. However, after a period, the source BSS determines that it has not received a second acknowledgement and decides to proceed with only CS Handover. It therefore sends a DTM Handover Proceed message 10, along with a CS only indicator and the mobile retunes 11, to the new cell.

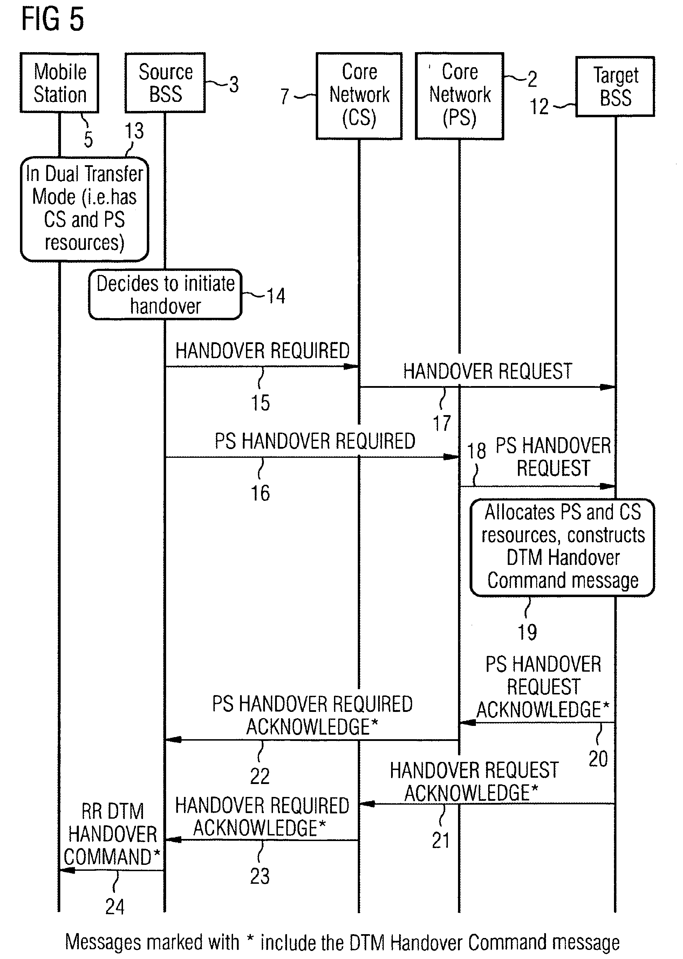

The figures above show only the return part of the signalling, so Fig. 5 gives more detail of the conventional DTM handover procedure, up to the sending of the DTM Handover command to the mobile.

The mobile station 5 is operating in dual transfer mode, i.e. having simultaneous CS and PS resources 13. The source BSS for the mobile 5 decides to initiate a handover 14 and sends CS and PS Handover Required signals 15, 16 to the CS and PS core network 7, 2 respectively. On receipt, each core network 7, 2 sends its respective handover request 17, 18 to the target BSS 12.

At the target BSS 12, PS and CS resources are allocated and a DTM Handover Command message is constructed 19. The DTM Handover Command is sent back via both PS and CS domains included in the PS and CS Handover Request Acknowledge messages 20, 21 to the PS and CS core networks 2, 7. From here the DTM Handover Command is included in PS and CS Handover Required Acknowledge messages 22, 23 which are sent to the source BSS 3. When both messages 22, 23 have been received at the source BSS 5, then the DTM Handover Command 24 is forwarded to the mobile 5.

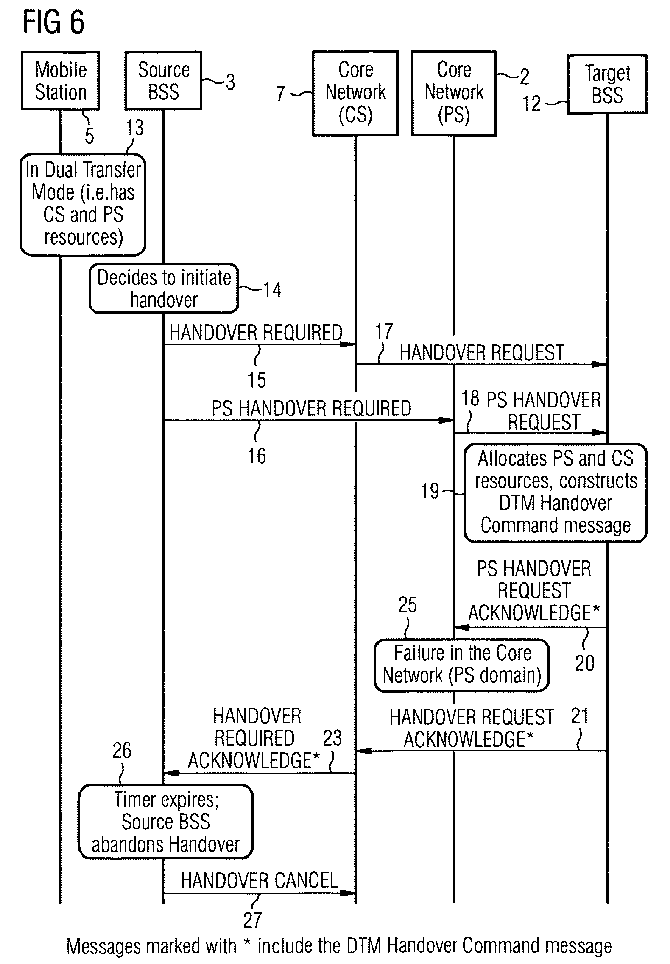

Fig. 6 shows how the method of Fig. 5 responds to a failure in the core network for one domain. Although the PS Handover Request Acknowledge 20 is received by the PS core network 2, the PS network is unable 25 to produce the Handover Required acknowledge, so although the CS Handover Required Acknowledge 23 reaches the source BSS 3, a timer expires 26 and the source BSS 3 decides to cancel the handover, sending a Handover Cancel message 27 to the CS core network 7.

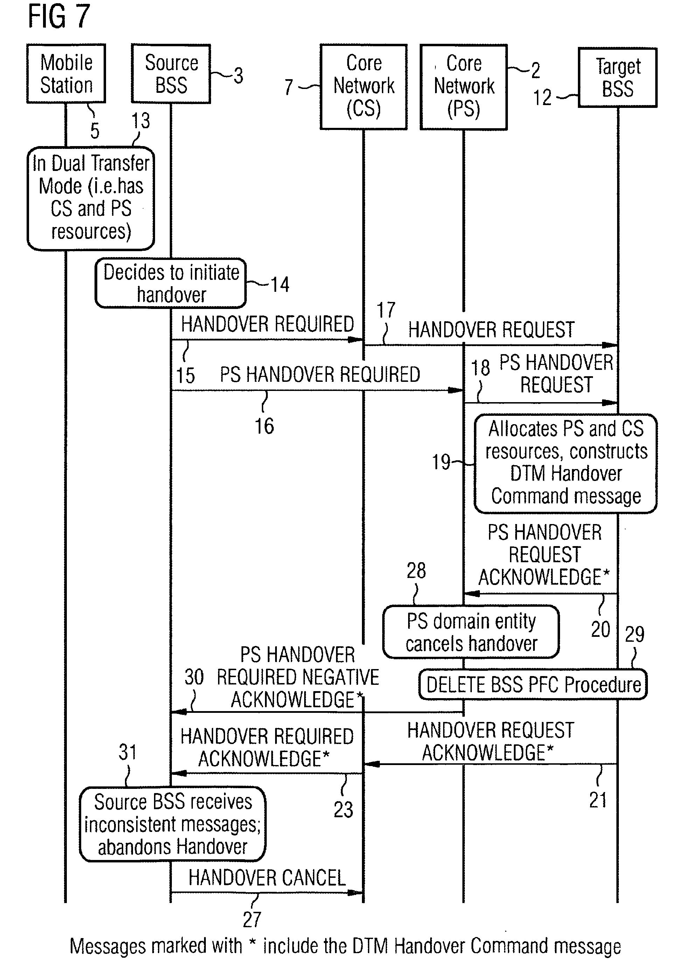

In another failure situation, shown by Fig. 7 the PS domain entity in the PS core network 2 cancels 28 the handover and a Delete BSS PFC procedure 29 is carried out. Thus, the PS core network sends a PS Handover Required Negative Acknowledge 30. Although the messages 21, 23 in the CS domain are successfully received, the source BSS 3 determines 31 that it has received two inconsistent messages 23, 30 and cancels 27 the handover.

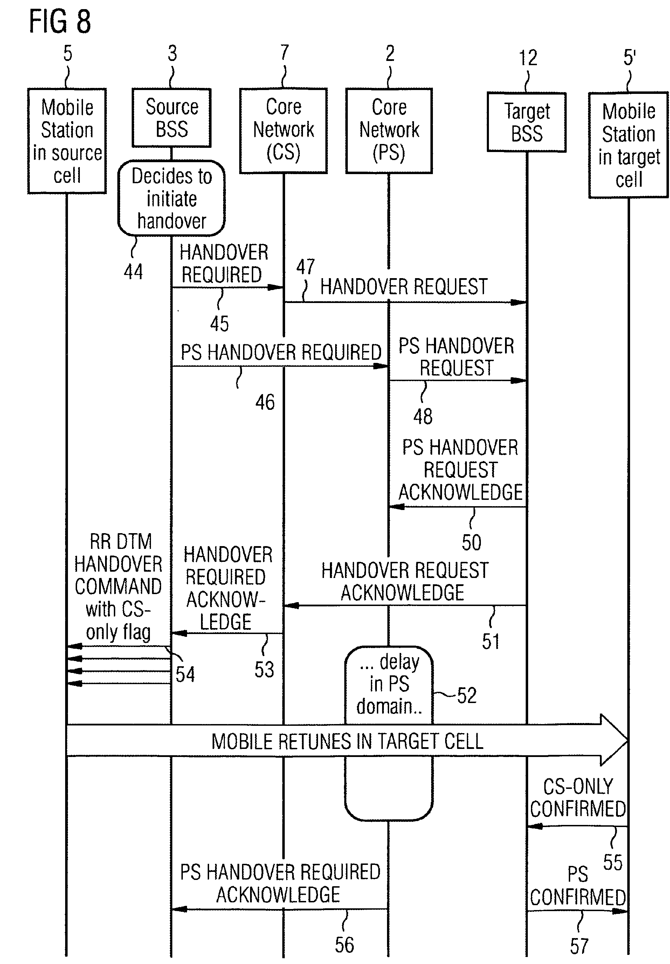

The present invention addresses the problems of the Figs. 6 and 7 examp les as shown in Fig. 8. As before, the source BSS decides to activate 44 a handover and sends CS and PS Handover Required messages 45, 46 to the respective core networks 7, 2. The networks generate CS and PS Handover Requests 47, 48 to the target BSS 12. The target BSS sends to the PS and CS core networks, PS and CS Handover Request Acknowledge 50, 51 including a DTM handover command indicating the resources allocated in each domain. The CS core network successfully sends on a Handover Required Acknowledge 53, but there is a delay in the PS domain 52. On receipt of the Handover Required Acknowledge 53, the source BSS 3 sends on the DTM Handover Command in a radio resource message 54, with a flag indicating this is confirmed as valid for CS only.

After the mobile 5 has retuned to the target cell, it sends the target BSS a message 55, CS Only Confirmed, indicating that only the CS resources are confirmed. However, the target BSS sends a message 57, PS Confirmed, informing the mobile 5' that the PS resources are also confirmed.

In this example, the PS Handover Acknowledge 56 was simply delayed, but the method is equally appropriate in the situation where the message 56 is never received by the source BSS, because the target BSS knows what resources were actually allocated and can inform the mobile of that after it relocates.

In its simplest form, the present invention deals with reducing the time before the dual transfer mode command can be sent to the mobile, so increasing the chance of this large message getting through before the mobile loses its connection. This is done by sending the first copy received without waiting for the second acknowledgement to arrive, which is conventionally required.

In one example of the present invention, reduction in delay between the source BSS receiving the second copy of the DTM Handover Command, and the time at which the mobile can begin to effect the handover (i.e. re-tuning to the new cell, etc.) is achieved by adding a 'Wait' indication to the radio resource message containing the DTM Handover Command and the source BSS sending the DTM Handover Command in a message including the 'Wait' indication, as soon as the first copy of the DTM Handover Command is received by the source BSS.

A new message 'DTM Handover Proceed' is sent as soon as the second copy of the DTM Handover Command message is received, or as soon as the message containing the DTM Handover Command has finished being sent, whichever is later.

If the source BSS and target BSS are the same, as might be the case if the cells being moved between are controlled by the same BSS, the core network may or may not be involved in each domain. If in this case, the core network is involved in one domain, the DTM Handover Command may or may not be included in messages sent between the BSS and core network. In the example where the core network is involved in one domain but not the other, the DTM Handover Command is constructed and, conventionally is sent to the mobile as soon as the resources have been reserved in the target cell after an acknowledgement is received from the core network. The DTM handover command may be sent to the mobile device as soon as resources have been reserved in the target cell and, in one example, the DTM Handover Proceed message is sent after any acknowledgement is received from the core network.

Another feature of the present invention is that the handover is allowed to proceed if only one copy of the DTM Handover Command is received by the source BSS. This includes the case where the source BSS has a timer and proceeds at the expiry of the timer, irrespective of whether the source BSS has actually received the second copy of the DTM Handover Command. Preferably, an indication is added to the DTM Handover Proceed message to indicate that the resources in only one (specified) domain are known to be valid. The handover then proceeds.

Sending the DTM Handover Command over the air interface, i.e. from the network to the mobile station is likely to take a significant amount of time due to its size, since it contains descriptions of both packet-switched and circuit-switched resources in the new cell. By contrast, the DTM Handover Proceed message is much smaller and faster to transmit. This invention allows the mobile to begin the actual handover process (i.e. re-tuning to the new cell, etc.) earlier than would otherwise be the case.

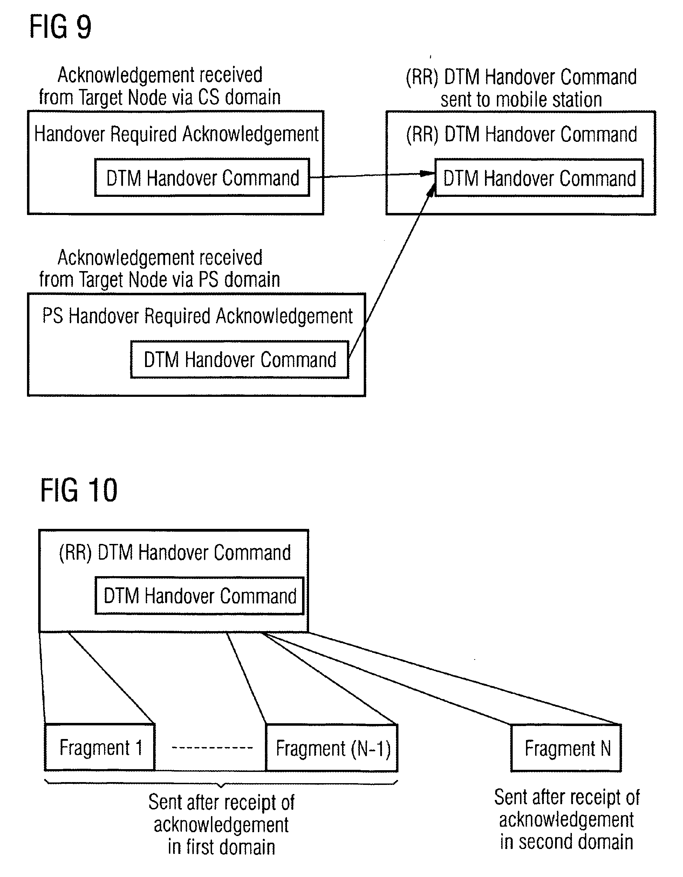

An alternative to sending the complete DTM Handover Command in the RR message, followed by a proceed message, is to send all but one segment of the RR message as soon as the first acknowledgement is received, and use the last segment as the trigger for the mobile to proceed with the handover. An example of this is shown in Fig. 10, where the RR message is broken down into N fragments to send and fragments 1 to N-1 are sent after receipt of the acknowledgement in the first domain, then fragment N is sent after receipt of the acknowledgement in the second domain. The mobile knows that fragment N is the last fragment because of the way that the existing segmentation scheme works.

A further aspect of the present invention addresses the problem that in a handover of a mobile station connected via multiple domains (e.g. packet-switched or circuit-switched), there may be an attempt made to handover the mobile from a source cell to target cell, whereby the controller of the target cell allocates resources in multiple domains, constructs a message describing all of these resources, and passes this back through the (more than one) core networks, usually one core network per domain, but the controller of the source cell does not receive copies of this message from all relevant domains. This means that it may not be able to ascertain that all the resources described in the message are still available. However, it is reasonable to assume that the resources in the domains corresponding to the core networks through which the message was received are valid.

Conventionally, the source controller aborts the entire procedure, and re-initiates the handover in one or more domains. However, this adds significant delay to the handover, to the extent that the mobile may have moved out of coverage of the source cell before it has received a message instructing it to move to another cell.

In the specific case of DTM Handover procedure in GSM mobile networks, a mobile station in Dual Transfer Mode (DTM) is 'connected' in both circuit-switched (CS) and packet-switched (PS) domains. The handover procedure uses existing CS and PS handover procedures in parallel. In normal operation, the Base Station Subsystem (BSS) for the source cell receives (via the PS and CS core networks) two copies of a 'DTM Handover Command' message, which contains details of resources allocated in both PS and CS domains. This message has been constructed by the target BSS and would normally be transmitted without modification by the source BSS to the mobile station within the RR DTM Handover Command message, when both copies have been received as is shown in Fig. 1.

However, if there is a problem in the core network in one of the domains during the handover procedure, a situation may arise where the source BSS receives the DTM Handover Command message from one domain, but not the other. In such a scenario the resources described in the DTM Handover Command message would almost certainly be valid in the domain from which the message was received, but may or may not be valid in the other domain. There are many failure cases that this invention applies to. The source BSS may receive, from the other domain, a message indicating that the handover has not been successful in that domain, or it may receive no message at all in the domain. In Figs. 6 and 7, two examples are shown, based on the source BSS having a timer and if a message has not arrived when the timer expires, the source BSS proceeds based on so-far received messages. In both conventional cases this results in the cancellation of the handover.

However, retrying the handover (in one or both domains) adds extra delay to the entire procedure, and increases the probability that the mobile will be out of coverage of the source cell by the time the source cell attempts to send it a handover command message.

In order to reduce the time taken for the handover, it is beneficial to allow the source BSS to transmit a message to the mobile station that would allow it to continue with the handover in the one domain for which the information is known to be valid. In such a case, it is also be desirable for the mobile, having tuned to the new cell, to be able to quickly inform the target BSS of the domain(s) in which it considers the handover to be proceeding. Furthermore, if the resources in the domain which were not known to be valid are in fact valid (e.g. because there was a delay in the core network in that domain, and the source BSS proceeded without waiting for the second message), the target BSS is able to inform the mobile that all the resources in the DTM Handover Command message are valid. If this is not possible, then the resources in that domain will have to be established in the normal way; but this can be very time-consuming.

It may be that, for operational reasons, only the CS domain is allowed to continue alone, but the principal of the invention applies to either domain continuing alone.

As generally illustrated by the examples of the present invention, a message, which may be encapsulated in an outer message, describes resources in more than one domain and may be sent together with an indication that resources in a sub-set of the domains are not known to be valid and available. It is not necessary to modify the original message for this purpose, only to add to the outer message.

A GSM specific solution of this invention is that an indication is added to the RLC DTM Handover Command message, but outside of the DTM Handover Command message, to indicate to the mobile station those domains in which the indicated resources are known to be valid. Two possible ways of coding this information are shown below

### Option one: fixed length encoding

| **Bits** | **Meaning** |
|---|---|
| 00 | <not used> |
| 01 | Only CS domain resources valid |
| 10 | Only PS domain resources valid |
| 11 | Both CS and PS resources valid |

### Option two: more efficient variable-length coding if both domains are valid in most cases:

| **Bits** | **Meaning** |
|---|---|
| 0 | Both CS and PS resources valid |
| 11 | Only CS domain resources valid |
| 10 | Only PS domain resources valid |

Following receipt of the RR DTM Handover Command message, the mobile is required to perform an 'access procedure' in the new cell. This is the same as for a (legacy) CS-only handover, and uses a Handover Reference value to identify the mobile to the target BSS. A further feature of the present invention, is that following, or as part of, the access procedure in the new cell, the mobile indicates to the network the domain(s) in which it believes resources to be valid. If no specific indication is made, this implies that the mobile believes resources to be valid in both/all domains.

For the example where the CS resources are valid and the source BSS has indicated to the mobile that only CS domain resources are valid, the indication could be done by modifying the Handover Reference in a simple way, e.g. by inverting all of the bits. Alternatively, the mobile could send a message to the target BSS once the access procedure has been completed, as shown in Fig. 8.

In the example where PS resources are valid and the source BSS has indicated to the mobile that only PS domain resources are valid, there are several possible solutions to allow the mobile to indicate to the target BSS that it believes the CS resources to be not valid. These include the mobile us ing the existing handover reference value together with the existing PS Handover access procedure, or the mobile requesting either CS or PS resources using legacy procedures, then sending a message to the target BSS that it has received the DTM Handover Request

Having been informed by the mobile station that, as far as the mobile station is aware, resources are only valid and available in a subset of domains, the target node indicates to the mobile that resources in one or more domains within this subset are in fact valid. For example, in GSM it is possible that the source BSS indicates to the mobile station that it does not know if resources in one domain are valid, when in fact they are (e.g. if the core network delayed the message).

In this scenario, the mobile proceeds with the handover assuming the resources are valid in only one domain. On accessing the new cell, the mobile indicates this to the target BSS by one of the methods referred to above.

A new message is defined that is sent in the target cell to the mobile station to indicate that resources in a domain indicated in the RR DTM Handover Command message are valid. This has the advantage of possibly being much quicker to send than a currently-defined message describing the resources in the other domain.

Figure 8 shows the complete procedure, where the mobile indicates to the target BSS after the access procedure that it does not know if the PS resources are valid (using the 'CS-only confirmed' message), after which the target BSS responds with a 'PS confirmed' message to indicate that both the CS and PS resource are available and reserved for that mobile.

The overall advantage here is that some portion of the DTM Handover may proceed in cases where, under current proposals (in the standardization body), such a handover would have to be cancelled, and re-initiated.

Starting the handover again is a time-consuming process - existing resource allocations have to be cancelled, and new requests in one or both domains have to be made, via the core network.

Any delay in the handover procedure increases the probability that the mobile will, before completion of the handover, have moved out of radio coverage of the current (source) cell, and have to re-establish connections in the new cell.

If the mobile is informed that resources in only one domain are valid, and indicates this to the target BSS, then it is beneficial to define a small message to allow the target BSS to indicate to the mobile that all resources are in fact valid. The alternative would be to use existing procedures and messages to establish these resources which could take a significant amount of time (in particular, the description of such resources may require the transmission of more than one radio block. This invention would therefore reduce the interruption time (i.e. the time during which no data can be sent or received) in that domain for the user.

Furthermore, there is negligible additional processing required at either source or target BSSs.

An additional benefit of this invention, which is not applicable to prior art methods, is that since the mobile station has a description of the resources in the non-successful' domain, if in fact these resources are available, the target BSS can inform the mobile of this fact, making the resources available to the user much sooner than would be the case if they were established using legacy procedures.

If the target BSS constructs a DTM Handover Command, describing only CS or only PS resources in the case where some error, or delay in the 'forward' (source to target) direction means the target only gets one request, conventionally, a CS Handover Command is created. However, at the source BSS, it is simpler to send a DTM Handover Command with CS-only flag than to examine the received message to see whether it is a DTM Handover Command or a (CS-only) Handover Command, and to construct the air-interface message accordingly, thus reducing processing at the source BSS.

## Claims

1. A method of dual transfer mode, DTM, handover in a communication system comprising at least one mobile device (5), a source node (3) and a target node (12), the method comprising: sending a handover request from a source node (3) to a target node (12)/ in a first domain and a second domain; returning an acknowledgement (1,6) in both the first and second domains, the acknowledgements (1,6) including a DTM handover command (4); and when a first positive acknowledgement (6) is received from the first domain, forwarding to a mobile device (5), all or part of the DTM handover command (4), **characterised in that** all or part of the DTM handover command (4) is forwarded to the mobile device (5) prior to receiving the acknowledgement (6) from the second domain.

2. A method according to claim 1, wherein the DTM handover command (4) is forwarded to the mobile device (5) encapsulated in a radio resource, RR, or radio link control, RLC, message.

3. A method according to claim 2, wherein a wait indication is added to the RR or RLC message.

4. A method according to claim 2, wherein the RR or RLC message includes an indication to the mobile device of the validity of the DTM handover command (4) in one or both domains.

5. A method according to claim 4, wherein the mobile device (5) proceeds with handover after receipt of the DTM handover command (4), without the mobile (5) having received confirmation that information concerning both domains is valid.

6. A method according to claim 4, the source node (3) takes into account the quality of a radio link between itself and the mobile device (5) when deciding whether or not to send the message to the mobile device (5) without having received confirmation that information concerning both domains is valid.

7. A method according to any preceding claim, wherein an indication of validity in one or both domains is provided by the target node (12) in response to a request from the mobile device (5) after connection to the target node (12).

8. A method according to any preceding claim, wherein a proceed signal (8) is sent from the source node (3) to the mobile device (5).

9. A method according to claim 8, wherein the proceed signal (8) is sent from the source node (3) to the mobile (5) on receipt of a second positive acknowledgement (6).

10. A method according to claim 8 or claim 9, wherein the proceed signal (8) includes an indication to the mobile device (5) of the validity of the DTM handover command (4) in one or both domains.

11. A method according to claim 8 or claim 9, wherein all but the final segment of the message is sent after the first positive acknowledgement (1) is received at the source node (3), and the proceed signal (8) comprises the final segment of the message.

12. A method according to at least claim 8, wherein the mobile device (5) only completes the handover on receipt of the proceed signal (8) from the source node (3).

13. A method according to any preceding claim wherein the DTM handover command (4) contains resources for only one domain.

14. A method according to any preceding claim, wherein the first domain comprises one of circuit switched CS, and packet switched PS, domains, and the second domain comprises the other of CS and PS domains.

15. A communication system comprising at least one mobile device (5), a source node (3) and a target node (12), wherein the source node (3) is adapted to send a handover request to the target node (12) in a first domain and a second domain, receive an acknowledgement (1, 6) in both the first and second domains, the acknowledgements (1, 6) including a dual transfer mode, DTM, handover command, and when a first positive acknowledgement (1) is received from the first domain, forward to the mobile device (5), all or part of the DTM handover command (4), **characterized in that** the source node (3) is adapted to forward all or part of the DTM handover command (4) to the mobile device (5) prior to receiving the acknowledgement (6) from the second domain.

16. A method of dual transfer mode, DTM, handover in a source node (3) for a communication system, the method comprising: sending a handover request to a target node (12) in a first domain and a second domain; receiving an acknowledgement (1, 6) in both the first and second domains, the acknowledgements (1, 6) including a DTM handover command; and when a first positive acknowledgement (1) is received from the first domain, forwarding to a mobile device (5), all or part of the DTM handover command (4), **characterized in that** all or part of the DTM handover command (4) is forwarded to the mobile device (5) prior to receiving the acknowledgement (6) from the second domain.

17. A source node (3) for a communication system, the source node (3) being adapted to send a handover request to a target node (12) in a first domain and a second domain, receive an acknowledgement (1, 6) in both the first and second domains, the acknowledgements (1, 6) including a dual transfer mode, DTM, handover command, and when a first positive acknowledgement (1) is received from the first domain, forward to a mobile device (5), all or part of the DTM handover command (4), **characterized in that** the source node (3) is adapted to forward all or part of the DTM handover command (4) to the mobile device (5) prior to receiving the acknowledgement (6) from the second domain.

## Patentansprüche

1. Verfahren zum Handover im Dual Transfer Mode bzw. DTM in einem Kommunikationssystem mit mindestens einem Mobilgerät (5), einem Quellenknoten (3) und einem Zielknoten (12), wobei das Verfahren die folgenden Schritte umfasst: Senden einer Handover-Anforderung von einem Quellenknoten (3) zu einem Zielknoten (12) in einer ersten Domäne und einer zweiten Domäne; Zurückgeben einer Bestätigung (1, 6) sowohl in der ersten als auch in der zweiten Domäne, wobei die Bestätigungen (1, 6) einen DTM-Handover-Befehl (4) enthalten; und wenn eine erste positive Bestätigung (6) von der ersten Domäne empfangen wird, Weiterleiten des gesamten DTM-Handover-Befehls (4) oder eines Teils davon zu einem Mobilgerät (5), **dadurch gekennzeichnet, dass** der gesamte DTM-Handover-Befehl (4) oder ein Teil davon vor dem Empfangen der Bestätigung (6) von der zweiten Domäne zu dem Mobilgerät (5) weitergeleitet wird.

2. Verfahren nach Anspruch 1, wobei der DTM-Handover-Befehl (4) in eine Radio-Resource- bzw. RR- oder in eine Radio-Link-Control- bzw. RLC-Nachricht eingebettet zu dem Mobilgerät (5) weitergeleitet wird.

3. Verfahren nach Anspruch 2, wobei eine Wait-Indikation zu der RR- oder RLC-Nachricht hinzugefügt wird.

4. Verfahren nach Anspruch 2, wobei die RR- oder RLC-Nachricht eine Indikation für das Mobilgerät der Gültigkeit des DTM-Handover-Befehls (4) in einer oder beiden Domänen enthält.

5. Verfahren nach Anspruch 4, wobei das Mobilgerät (5) nach dem Empfang des DTM-Handover-Befehls (4) mit dem Handover fortfährt, ohne dass das Mobilgerät (5) eine Bestätigung empfangen hat, dass Informationen bezüglich beider Domänen gültig sind.

6. Verfahren nach Anspruch 4, wobei der Quellenknoten (3) bei der Entscheidung, ob die Nachricht zu dem Mobilgerät (5) gesendet werden soll, ohne dass eine Bestätigung empfangen wurde, dass Informationen bezüglich beider Domänen gültig sind, die Qualität der Funkstrecke zwischen sich selbst und dem Mobilgerät (5) berücksichtigt.

7. Verfahren nach einem der vorhergehenden Ansprüche, wobei durch den Zielknoten (12) als Reaktion auf eine Anforderung von dem Mobilgerät (5) nach der Verbindung mit dem Zielknoten (12) eine Indikation der Gültigkeit in einer oder beiden Domänen bereitgestellt wird.

8. Verfahren nach einem der vorhergehenden Ansprüche, wobei ein Proceed-Signal (8) von dem Quellenknoten (3) zu dem Mobilgerät (5) gesendet wird.

9. Verfahren nach Anspruch 8, wobei das Proceed-Signal (8) bei Empfang einer zweiten positiven Bestätigung (6) von dem Quellenknoten (3) zu dem Mobilgerät (5) gesendet wird.

10. Verfahren nach Anspruch 8 oder Anspruch 9, wobei das Proceed-Signal (8) eine Indikation für das Mobilgerät (5) der Gültigkeit des DTM-Handover-Befehls (4) in einer oder beiden Domänen enthält.

11. Verfahren nach Anspruch 8 oder Anspruch 9, wobei bis auf das abschließende Segment die gesamte Nachricht gesendet wird, nachdem die erste positive Bestätigung (1) in dem Quellenknoten (3) empfangen wird, und das Proceed-Signal (8) das abschließende Segment der Nachricht umfasst.

12. Verfahren mindestens nach Anspruch 8, wobei das Mobilgerät (5) das Handover erst bei Empfang des Proceed-Signals (8) von dem Quellenknoten (3) vollendet.

13. Verfahren nach einem der vorhergehenden Ansprüche, wobei der DTM-Handover-Befehl (4) Betriebsmittel nur für eine Domäne enthält.

14. Verfahren nach einem der vorhergehenden Ansprüche, wobei die erste Domäne eine leitungsvermittelte bzw. CS-Domäne oder eine paketvermittelte bzw. PS-Domäne umfasst und die zweite Domäne jeweils die andere der CS-Domäne und PS-Domäne umfasst.

15. Kommunikationssystem mit mindestens einem Mobilgerät (5), einem Quellenknoten (3) und einem Zielknoten (12), wobei der Quellenknoten (3) dafür ausgelegt ist, eine Handover-Anforderung zu dem Zielknoten (12) in einer ersten Domäne und einer zweiten Domäne zu senden, eine Bestätigung (1, 6) sowohl in der ersten als auch in der zweiten Domäne zu empfangen, wobei die Bestätigungen (1, 6) einen Handover-Befehl des Dual Transfer Mode bzw. DTM enthalten, und, wenn eine erste positive Bestätigung (1) von der ersten Domäne empfangen wird, den gesamten DTM-Handover-Befehl (4) oder einen Teil davon zu dem Mobilgerät (5) weiterzuleiten, **dadurch gekennzeichnet, dass** der Quellenknoten (3) dafür ausgelegt ist, den gesamten DTM-Handover-Befehl (4) oder einen Teil davon vor dem Empfangen der Bestätigung (6) von der zweiten Domäne zu dem Mobilgerät (5) weiterzuleiten.

16. Verfahren zum Handover im Dual Transfer Mode bzw. DTM in einem Quellenknoten (3) für ein Kommunikationssystem, wobei das Verfahren die folgenden Schritte umfasst: Senden einer Handover-Anforderung zu einem Zielknoten (12) in einer ersten Domäne und einer zweiten Domäne; Empfangen einer Bestätigung (1, 6) sowohl in der ersten als auch in der zweiten Domäne, wobei die Bestätigungen (1, 6) einen DTM-Handover-Befehl enthalten; und wenn eine erste positive Bestätigung (1) von der ersten Domäne empfangen wird, Weiterleiten des gesamten DTM-Handover-Befehls (4) oder eines Teils davon zu einem Mobilgerät (5), **dadurch gekennzeichnet, dass** der gesamte DTM-Handover-Befehl (4) oder ein Teil davon vor dem Empfangen der Bestätigung (6) von der zweiten Domäne zu dem Mobilgerät (5) weitergeleitet wird.

17. Quellenknoten (3) für ein Kommunikationssystem, wobei der Quellenknoten (3) dafür ausgelegt ist, eine Handover-Anforderung zu einem Zielknoten (12) in einer ersten Domäne und einer zweiten Domäne zu senden, eine Bestätigung (1, 6) sowohl in der ersten als auch in der zweiten Domäne zu empfangen, wobei die Bestätigungen (1, 6) einen Handover-Befehl des Dual Transfer Mode bzw. DTM enthalten, und, wenn eine erste positive Bestätigung (1) von der ersten Domäne empfangen wird, den gesamten DTM-Handover-Befehl (4) oder einen Teil davon zu einem Mobilgerät (5) weiterzuleiten, **dadurch gekennzeichnet, dass** der Quellenknoten (3) dafür ausgelegt ist, den gesamten DTM-Handover-Befehl (4) oder einen Teil davon vor dem Empfangen der Bestätigung (6) von der zweiten Domäne zu dem Mobilgerät (5) weiterzuleiten.

## Revendications

1. Procédé de changement de cellule en mode de transfert double DTM dans un système de communication comprenant au moins un dispositif mobile (5), un noeud source (3) et un noeud cible (12), le procédé comprenant : envoyer une demande de changement de cellule d'un noeud source (3) vers un noeud cible (12) dans un premier domaine et un second domaine ; envoyer un accusé (1, 6) à la fois dans le premier et le second domaines, les accusés (1, 6) incluant une commande de changement de cellule DTM (4) ; et, lorsqu'un premier accusé positif (6) provenant du premier domaine est reçu, transférer à un dispositif mobile (5) la totalité ou une partie de la commande de changement de cellule DTM (4), **caractérisé en ce que** la totalité ou une partie de la commande de changement de cellule DTM (4) est transférée au dispositif mobile (5) avant la réception de l'accusé (6) provenant du second domaine.

2. Procédé selon la revendication 1, dans lequel la commande de changement de cellule DTM (4) est transférée, au dispositif mobile (5), encapsulée dans un message de ressources radio RR ou de contrôle de liaison radio RLC.

3. Procédé selon la revendication 2, dans lequel une indication d'attente est ajoutée au message RR ou RLC.

4. Procédé selon la revendication 2, dans lequel le message RR ou RLC inclut une indication au dispositif mobile de la validité de la commande de changement de cellule DTM (4) dans un ou dans les deux domaines.

5. Procédé selon la revendication 4, dans lequel le dispositif mobile (5) continue le changement de cellule après réception de la commande de changement de cellule DTM (4) sans que le mobile (5) ait reçu confirmation de la validité de l'information concernant les deux domaines.

6. Procédé selon la revendication 4, dans lequel le noeud source (3) prend en compte la qualité d'une liaison radio entre lui-même et le dispositif mobile (5) lorsqu'il décide d'envoyer ou non le message au dispositif mobile (5) sans avoir reçu confirmation de la validité de l'information concernant les deux domaines.

7. Procédé selon l'une des revendications précédentes, dans lequel une indication de validité dans un ou dans les deux domaines est fournie par le noeud cible (12) en réponse à une demande du dispositif mobile (5) après connexion au noeud cible (12).

8. Procédé selon l'une des revendications précédentes, dans lequel un signal de continuation (8) est envoyé du noeud source (3) vers le dispositif mobile (5).

9. Procédé selon la revendication 8, dans lequel le signal de continuation (8) est envoyé du noeud source (3) vers le dispositif mobile (5) à la réception d'un second accusé positif(6).

10. Procédé selon la revendication 8 ou la revendication 9, dans lequel le signal de continuation (8) inclut une indication au dispositif mobile (5) de la validité de la commande de changement de cellule DTM (4) dans un ou dans les deux domaines.

11. Procédé selon la revendication 8 ou la revendication 9, dans lequel la totalité du message à l'exception du segment final est envoyée après réception du premier accusé positif (1) au niveau du noeud source (3) et le signal de continuation (8) comprend le segment final du message.

12. Procédé selon au moins la revendication 8, dans lequel le dispositif mobile (5) n'achève le changement de cellule qu'à la réception du signal de continuation (8) provenant du noeud source (3).

13. Procédé selon l'une des revendications précédentes, dans lequel la commande de changement de cellule DTM (4) ne contient des ressources que pour un seul domaine.

14. Procédé selon l'une des revendications précédentes, dans lequel le premier domaine comprend l'un ou l'autre entre un domaine à commutation de circuits CS et un domaine à commutation de paquets PS et le second domaine comprend l'autre domaine CS ou PS.

15. Système de communication comprenant au moins un dispositif mobile (5), un noeud source (3) et un noeud cible (12), dans lequel le noeud source (3) est adapté pour envoyer une demande de changement de cellule au noeud cible (12) dans un premier domaine et un second domaine, recevoir un accusé (1, 6) à la fois dans le premier et le second domaines, les accusés de (1, 6) incluant une commande de changement de cellule en mode de transfert double DTM et, lorsqu'un premier accusé positif (1) provenant du premier domaine est reçu, transférer au dispositif mobile (5) la totalité ou une partie de la commande de changement de cellule DTM (4), **caractérisé en ce que** le noeud source (3) est adapté pour transférer la totalité ou une partie de la commande de changement de cellule DTM (4) au dispositif mobile (5) avant la réception de l'accusé (6) provenant du second domaine.

16. Procédé de changement de cellule en mode de transfert double DTM dans un noeud source (3) pour un système de communication, le procédé comprenant : envoyer une demande de changement de cellule à un noeud cible (12) dans un premier domaine et un second domaine ; recevoir un accusé (1, 6) à la fois dans le premier et le second domaines, les accusés (1, 6) incluant une commande de changement de cellule DTM ; et, lorsqu'un premier accusé positif (1) provenant du premier domaine est reçu, transférer à un dispositif mobile (5) la totalité ou une partie de la commande de changement de cellule DTM (4), **caractérisé en ce que** la totalité ou une partie de la commande de changement de cellule DTM (4) est transféré au dispositif mobile (5) avant la réception de l'accusé (6) provenant du second domaine.

17. Noeud source (3) pour un système de communication, le noeud source (3) étant adapté pour envoyer une demande de changement de cellule à un noeud cible (12) dans un premier domaine et un second domaine, recevoir un accusé (1, 6) à la fois dans le premier et le second domaines, les accusés (1, 6) incluant une commande de changement de cellule en mode de transfert double DTM et, lorsqu'un premier accusé positif (1) provenant du premier domaine est reçu, transférer à un dispositif mobile (5) la totalité ou une partie de la commande de changement de cellule DTM (4), **caractérisé en ce que** le noeud source (3) est adapté pour transférer la totalité ou une partie de la commande de changement de cellule DTM (4) au dispositif mobile (5) avant la réception de l'accusé (6) provenant du second domaine.
